# EUROPEAN PATENT SPECIFICATION

(11) **EP 2 016 457 B1**
(45) Date of publication and mention of the grant of the patent: **22.06.2011**
(21) Application number: 07734521.3
(22) Date of filing: 08.05.2007
(51) Int. Cl.: G02C 5/00, G02C 5/08

(54) **SPECTACLES WITH A FOLDABLE STRUCTURE**
BRILLE MIT KLAPPBARER STRUKTUR
LUNETTES PLIANTES

(30) Priority: 08.05.2006 IT PN20060034
(43) Date of publication of application: 21.01.2009
(73) Proprietor: CL & GP S.R.L., 32044 Pieve di Cadore (BL) (IT)
(72) Inventor: ZAGO, Giovanni, I-33081 AVIANO, Pordenone (IT)
(74) Representative: Coletti, Raimondo
(86) International application number: PCT/IB2007/001211
(87) International publication number: WO 2007/129212

(56) References cited:
- EP-A- 1 564 579
- DE-U1- 29 712 271
- FR-A1- 2 619 935
- GB-A- 342 468
- US-A- 5 208 616
- US-A- 5 896 185

## Description

The present invention relates to a pair of foldable spectacles, suitable for forming a compact structure, in particular when these are at rest and not being used.

The technical and functional characteristics of the spectacles, object of the invention, meet the practical requirements of users, offering the possibility of possessing a pair of spectacles which, without jeopardizing the necessary and absolutely indispensable optical and anatomical qualities which this type of product must possess, have reduced dimensions, are extremely light and have a considerably reduced encumbrance, with respect to traditional structures, both when the glasses are being worn and when they are at rest and are not in use.

According to historical records, the invention of spectacles is the fruit of an intuition on the part of an Italian glassmaker and, more specifically, Venetian of the seventeenth century.

This invention is held by many to be amongst the ten most important inventions in the history of mankind, considering that one person out of three, already at a young age, suffers from important sight defects, even if nowadays the above invention, to the great satisfaction of humanity, is becoming less important thanks to the discovery of sophisticated materials capable of perfectly imitating the organic materials of our sight system, and also the introduction of extremely reliable surgical methods capable of recovering even serious physical eye defects, also arising in old age.

It is known that man is an imperfect being and as such needs continuous treatment and attention, so much so that in spite of the miraculous progress in medical science, he still cannot live without assisting his eyesight with the help of corrective lenses.

In everyday life, however, this can cause discomfort and inconveniences as spectacles (and also other systems such as the more modern contact lenses) considerably hinder normal and regular movements and daily activities, both during working hours and free time.

The main hindrance lies in repetitive operations of putting on and taking off spectacles, for example, to be able to read a book or magazine but above all, it is extremely inconvenient to have to carry around glasses contained in bulky and cumbersome cases which are no longer suited to modern demands for moving around free of encumbering items.

In order to avoid all of this, for some years now there have been convenient types of universal lenses, so-called "bifocal" lenses, which can be adopted for both long-distance and short-distance sight, but their use implies further problems of adaptation for the eyes which it would be preferable to avoid and which, in any case, most users tend to postpone with time, above all if their age allows this.

US 5896185 and DE 29712271 disclose examples of spectacles with a foldable structure.

An objective of the present invention is therefore to overcome the drawbacks mentioned above and, in particular, to provide a pair of spectacles with a foldable structure which, although still having the necessary and indispensable technical-functional qualities of the optical and anatomical type, have a compact structure and reduced encumbrance with respect to traditional products, when they are at rest and not in use.

Another objective of the invention is to provide a pair of spectacles with a foldable structure which are considerably light and have reduced dimensions, with respect to the known products.

A further objective of the present invention is to indicate a pair of spectacles with a foldable structure, which can be produced with known technologies and economical components in order to obtain a functional and reliable product with reduced costs, with respect to the known art.

These and other objectives are achieved by a pair of spectacles with a foldable structure, according to claim 1 enclosed; other detailed technical characteristics are present in the subsequent claims.

The spectacles according to the invention advantageously have a series of flexible and foldable and/or dismountable portions so that the above spectacles can be placed in a case having the dimensions of a common credit card, possibly having a specific hollow seat, to allow them to be simply and conveniently transported.

These and further advantages will appear more evident from the following description, relating to an illustrative and preferred but non-limiting embodiment of flexible spectacles with a foldable structure, object of the present invention, and from the enclosed drawings, in which:
- figures 1-6 show the folding and closing sequence of a pair of spectacles with a foldable structure, produced according to the present invention;
- figure 7 shows a plan view of a case or holder suitable for containing the spectacles with a foldable structure according to the invention;
- figures 8-10 show the folding sequence and introduction of the spectacles, according to the invention, inside the case or holder according to figure 7;
- figures 11 and 12 show other embodiment variants of the case or holder according to figure 7 not part of the present invention.

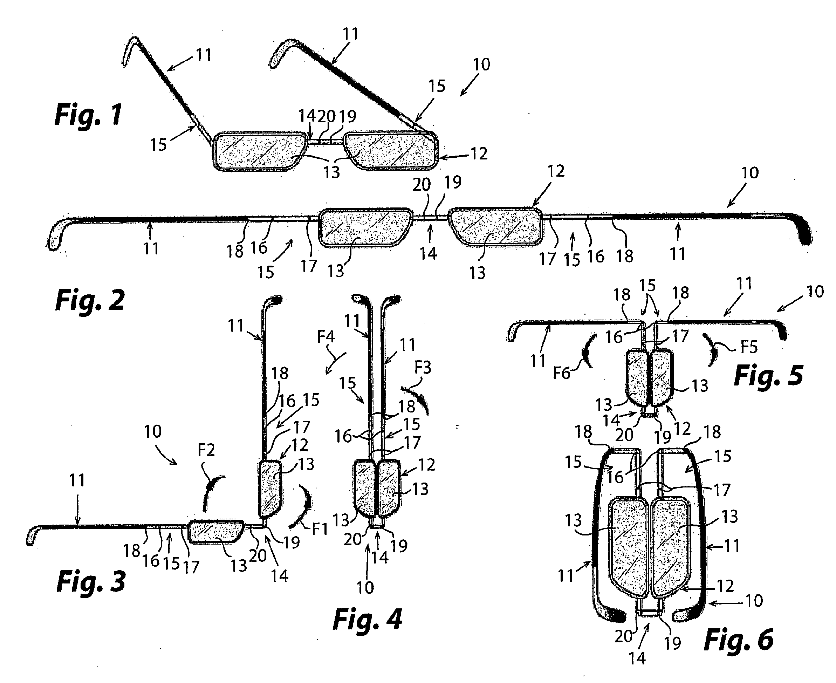

With particular reference to the above figures 1-6, the spectacles 10 basically have two arms or bars 11 and a frame 12, comprising a nib 14 to support the lenses 13.

The spectacles 10 can have premounted lenses 13 or can be indifferently without lenses 13.

Furthermore, they can have fixed arms 11, i.e. normally hinged to the frame 12, or separate arms 11 which can be dismounted from the frame 12.

In this latter case, the frame 12 of the spectacles can act as a pince-nez and the arms 11 can be applied in correspondence with specific seats (not illustrated in the figures), envisaged at the sides of the frame 12 and designed for being coupled with the relative arms 11, by insertion systems, by means of screws, pressure, bayonet, magnetic attraction and other similar systems.

If the arms 11 are of the fixed type (as illustrated in the enclosed figures), they are integral with or mechanically connected to respective portions 15 hinged to the sides of the frame 12 and provided with three articulated joints 16, 17, 18, which allow a 90° folding of the parts connected thereto.

As clearly illustrated in figures 1-6, which show the various folding and closing phases of the spectacles 10, in order to obtain a compact structure, suitable for being inserted into a case or holder having limited dimensions, the arms 11 are first opened out and extended horizontally, parallel to the nib 14, thanks to the presence of a first articulated joint 17, situated close to the sides of the frame 12, which allows a 90° rotation of the respective arms 11 (figures 1 and 2).

One of the arms 11 is then folded upwards, perpendicularly to the second arm 11 (following the direction of the arrow F1 of figure 3), rotating around a first articulated joint 19 of the nib 14 and, analogously and subsequently, the second arm 11 is folded by 90° (according to the direction of the arrow F2 of figure 3), rotating around the articulated joint 20 of the nib 14 so that the arms 11 and lenses 13 of the frame 12 are positioned adjacent and parallel (figures 3 and 4).

From this position, the arms 11 are again opened out, rotating around the articulated joints 16 of the portions 15 and moving the arms 11 by 90°, according to the respective directions of the arrows F3 and F4 of figure 4, so that the arms 11 are in a horizontal position, as shown in figure 5.

The arms are then folded again by 90°, rotating around the respective articulated joints 18, according to the respective directions of the arrows F5 and F6 of figure 5, so that the above arms 11 encircle the lenses 13 and frame 12 (figure 6).

According to the invention, the articulated joints 19, 20 allow the connection of three portions of the nib 14 having the same length, and also the articulated joints 16, 17, 18 allow the connection between four portions of each rod 11 having different lengths.

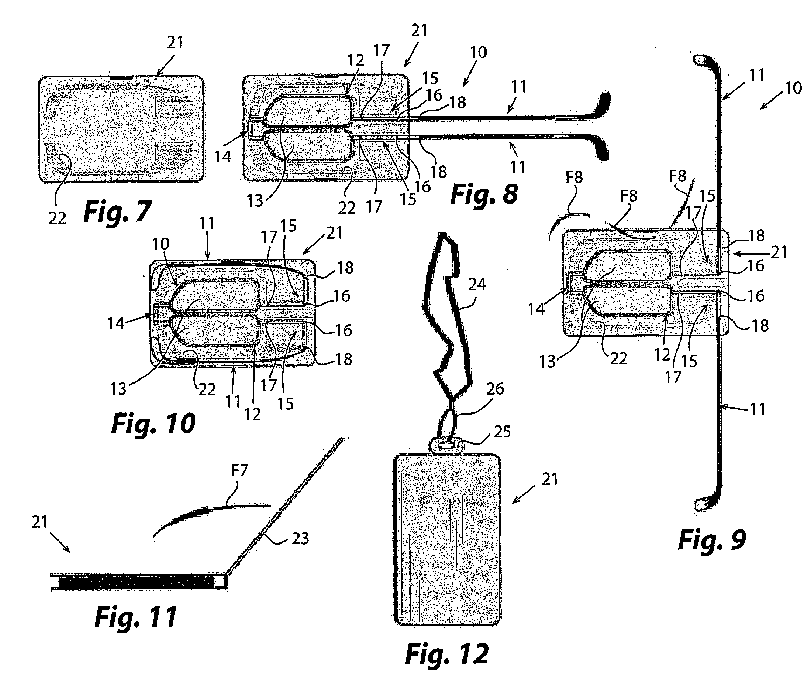

In this way, it is possible to insert the spectacles 10, thus folded, into specific protection cases or holders 21 (figures 7-12), which can have a very compact format and a considerably reduced encumbrance.

In particular, these arms 21 are preferably rectangular-shaped and can have a format and dimensions (in width and height) which are the same as those of a common bank credit card and consequently the opening and closing operations of the spectacles 10, as well as the transportation phases, are simplified as their format is the same as a normal credit card and they can therefore be easily inserted in a document-holder, key-case, wallet, etc. or directly in a pocket or compartment pocket.

The protection arms 21 can also have at least one cavity or central shaped seat 22, in which it is possible to insert the frame 12, the nib 14 and portions 15 of the arms 11.

As shown in figures 8-10 enclosed, it is also possible to preliminarily insert the spectacles 10 in the seat 22 of the case 21 (figure 8), already folded as illustrated in figure 4 and then proceed to first open out the arms 11, rotating around the articulated joints 16 (figure 9) and then close the arms 11, rotating around the articulated joints 18, so that they are inserted and housed outside the central seat 22 (according to the directions of the arrows F8 of figure 9) and in correspondence with the larger sides of the case 21, englobing the frame 12 at the centre of the case 21 (figure 10).

Finally, as shown in figures 11 and 12, which illustrate further modes of use of the case 21, this can be provided with an upper closing top 23, which can be closed according to the direction of the arrow F7 of figure 11, or it can be shaped so as to include a specific opening 25, with which a hook 26 and relative lace or ribbon 24 can be associated, for easier transportation.

As mentioned above, the spectacles 10 can also be dismounted in their essential components, such as the frame 12, complete with nib 14 (the spectacles 10 in this case can act as a pince-nez), and arms 11, the latter provided at one end with suitable hooking means to corresponding side seats of the frame 12.

Furthermore, the single components can be dimensionally produced so as to be firmly wedge-inserted into the central seat 22 of the case 21.

Finally, the dimensions of the rectangular-shaped case 21, are equal to 8.6 cm in length and 5.4 cm in width; these dimensions can both vary by ±20% and this variation can be uniform (maintaining the proportions) or nonuniform, with different percentage variations for each measurement in length and width.

The characteristics of the spectacles with a foldable structure, object of the present invention, are clear from the above description, as also their advantages.

Finally, numerous other variants can obviously be applied to the spectacles in question, all included in the novelty principles inherent in the inventive concept. It is also evident that, in the practical embodiment of the invention, the functions, materials, forms and dimensions of the details illustrated can vary according to demands and be substituted with other technically equivalent elements.

## Claims

1. Spectacles (10) with a foldable structure, comprising at least one frame (12), which comprises at least one nib (14) and arms or bars (11) removable or hinged to the sides of the frame (12), said nib (14) having two articulated joining points (19, 20), which connect three portions of the nib (14) with each-other and which allow a movement of substantially 90° of two portions of the nib (14), with respect to a portion of the nib (14) which remains fixed, **characterized in that** said each of said arms (11) has at least three articulated joining points (16, 17, 18), situated in succession and positioned in correspondence with the sides of the frame (12), said articulated joining points (16, 17, 18) being suitable for connecting at least four portions of each arm (11) and for allowing a movement of each arm (11) from a substantially perpendicular position to said nib (14) to a substantially parallel position to said nib (14) and at least two subsequent movements of substantially 90° of at least a portion of each arm (11), with respect to at least one portion of the arm (11), which remains fixed.

2. The spectacles (10) with a foldable structure according to claim 1, **characterized in that** said frame (12) represents a support for lenses (13) and can be adopted for the use of spectacles (10) of the pince-nez type.

3. The spectacles (10) with a foldable structure according to claim 1, **characterized in that** said portions of the nib (14) have equal lengths.

4. The spectacles (10) with a foldable structure according to claim 1, **characterized in that** said portions of each arm (11) have different lengths.

## Patentansprüche

1. Brille (10) mit klappbarer Struktur, umfassend mindestens eine Fassung (12), die mindestens einen Nasenbügel (14) und abnehmbare oder an die Seiten der Fassung (12) angelenkte Ohrbügel oder Stangen (11) umfasst, wobei der Nasenbügel (14) zwei Gelenkverbindungspunkte (19, 20) aufweist, die drei Teile des Nasenbügels (14) miteinander verbinden und die eine Bewegung von zwei Teilen des Nasenbügels (14) um im Wesentlichen 90° gegenüber einem unbeweglich bleibenden Teil des Nasenbügels (14) ermöglichen, **dadurch gekennzeichnet, dass** jeder der Ohrbügel (11) mindestens drei Gelenkverbindungspunkte (16, 17, 18) aufweist, die hintereinander liegen und auf Höhe der Seiten der Fassung (12) angeordnet sind, wobei die Gelenkverbindungspunkte (16, 17, 18) geeignet sind, um mindestens vier Teile jedes Ohrbügels (11) zu verbinden und eine Bewegung jedes Ohrbügels (11) aus einer im Wesentlichen zum Nasenbügel (14) senkrechten Lage in eine im Wesentlichen zum Nasenbügel (14) parallele Lage und mindestens zwei anschließende Bewegungen um im Wesentlichen 90° von mindestens einem Teil jedes Ohrbügels (11) gegenüber mindestens einem unbeweglich bleibenden Teil des Ohrbügels (11) zu ermöglichen.

2. Brille (10) mit klappbarer Struktur nach Anspruch 1, **dadurch gekennzeichnet, dass** die Fassung (12) einen Träger für Linsen (13) darstellt und für die Verwendung einer Brille (10) des Zwickertyps angewendet werden kann.

3. Brille (10) mit klappbarer Struktur nach Anspruch 1, **dadurch gekennzeichnet, dass** die Teile des Nasenbügels (14) die gleiche Länge haben.

4. Brille (10) mit klappbarer Struktur nach Anspruch 1, **dadurch gekennzeichnet, dass** die Teile jedes Ohrbügels (11) verschiedene Längen haben.

## Revendications

1. Lunettes (10) avec une monture pliable, comprenant au moins une armature (12), qui comprend au moins un pont (14) et des branches ou tiges (11) amovibles ou articulées sur les côtés de l'armature (12), ledit pont (14) ayant deux points de liaison articulée (19, 20), qui relient trois portions du pont (14) entre elles et qui permettent un mouvement de sensiblement 90° des deux portions du pont (14) par rapport à une portion du pont (14) qui reste fixe, **caractérisées en ce que** ladite chacune desdites branches (11) a au moins trois points de liaison articulée (16, 17, 18), situés en succession et positionnés en correspondance des côtés de l'armature (12), lesdits points de liaison articulée (16, 17, 18) étant adaptés pour relier au moins quatre portions de chaque branche (11) et pour permettre un mouvement de chaque branche (11) d'une position sensiblement perpendiculaire audit pont (14) à une position sensiblement parallèle audit pont (14) et au moins deux mouvements successifs de sensiblement 90° d'au moins une portion de chaque branche (11), par rapport à au moins une portion de la branche (11), qui reste fixe.

2. Lunettes (10) avec une structure pliable selon la revendication 1, **caractérisées en ce que** ladite armature (12) représente un support pour des verres (13) et peut être adoptée pour l'utilisation de lunettes (10) du type pince-nez.

3. Lunettes (10) avec une structure pliable selon la revendication 1, **caractérisées en ce que** lesdites portions du pont (14) ont des longueurs égales.

4. Lunettes (10) avec une structure pliable selon la revendication 1, **caractérisée en ce que** lesdites portions de chaque branche (11) ont des longueurs différentes.
